(19) Europäisches Patentamt
European Patent Office
Office européen des brevets

(11) **EP 3 782 937 B1**

(12) **EUROPEAN PATENT SPECIFICATION**

(45) Date of publication and mention
of the grant of the patent:
**24.08.2022 Bulletin 2022/34**

(21) Application number: **18915530.2**

(22) Date of filing: **16.04.2018**

(51) International Patent Classification (IPC):
*B65G 15/60* (2006.01)     *B65G 15/08* (2006.01)

(52) Cooperative Patent Classification (CPC):
**B65G 15/08; B65G 15/60;** B65G 2201/04;
B65G 2207/32

(86) International application number:
**PCT/JP2018/015742**

(87) International publication number:
**WO 2019/202640 (24.10.2019 Gazette 2019/43)**

(54) **BELT CONVEYOR**

FÖRDERBAND

TRANSPORTEUR À COURROIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.02.2021 Bulletin 2021/08**

(73) Proprietor: **Kawasaki Jukogyo Kabushiki Kaisha
Hyogo 650-8670 (JP)**

(72) Inventors:
• **ODAGIRI, Takashi
Kobe-shi, Hyogo 650-8670 (JP)**

• **SAKANE, Mamoru
Kobe-shi, Hyogo 650-8670 (JP)**

(74) Representative: **Dehns
St. Bride's House
10 Salisbury Square
London EC4Y 8JD (GB)**

(56) References cited:
CN-A- 105 151 648      JP-A- H08 268 524
JP-A- H09 175 618      JP-A- H09 194 011
JP-A- H11 263 418      JP-A- 2002 068 441
JP-A- 2002 129 982      JP-A- 2002 302 224
JP-A- 2014 114 116      JP-A- 2016 023 075

## Description

## Technical Field

The present invention relates to an air floating belt conveyor comprising a pressure variation suppressor as defined in appended claim 1.

## Background Art

Known is an air floating belt conveyor configured such that a conveyor belt that conveys conveyed objects is supported by air instead of idlers (see PTL 1 and PTL 2 for example).

## Citation List

## Patent Literature

PTL 1: Japanese Laid-Open Patent Application Publication No. 2012-136347

PTL 2: JP 2002 068441 A discloses a belt conveyor according to the preamble of claim 1.

Summary of Invention

Technical Problem

The air floating belt conveyor conveys the conveyed objects, such as bulk materials, in such a manner that: an air film is formed between the conveyor belt and a trough supporting the conveyor belt; and in this state, the conveyed objects are loaded on the conveyor belt. In some cases, when conveying the conveyed objects, an entire conveyor frame including the trough vibrates depending on the amount of conveyed objects loaded. When the conveyor frame vibrates, noise is generated by the vibration, and the amount of dust generated from the conveyed objects on the conveyor belt increases.

To suppress the vibration of the conveyor frame, there is a method of increasing the rigidity of the conveyor frame by, for example, increasing the weight of the conveyor frame. However, according to this method, the degree of freedom in design deteriorates, and the manufacturing cost of the belt conveyor increases by the increase in the weight of the conveyor frame.

The present invention was made under these circumstances, and an object of the present invention is to provide an air floating belt conveyor capable of operating stably by suppressing the vibration of a conveyor frame while suppressing a decrease in the degree of freedom in design and an increase in the manufacturing cost.

## Solution to Problem

A belt conveyor according to the present invention includes: a conveyor belt configured to convey a conveyed object; a trough supporting the conveyor belt through air; an air supply line through which the air is supplied to between the conveyor belt and the trough; and a pressure variation suppressor provided at the air supply line and configured to suppress a pressure variation having a predetermined frequency in the air supply line by generating a pressure variation that interferes with the pressure variation having the predetermined frequency.

According to the above configuration, since an air film is formed between the conveyor belt and the trough, the conveyor belt and the trough are connected to each other through the air. Then, the above pressure variation suppressor can suppress the pressure variation having the predetermined frequency generated in the air between the conveyor belt and the trough communicating with the air supply line. Therefore, the vibration of the trough at a vibration frequency corresponding to the predetermined frequency can be suppressed, and the vibration of the entire conveyor frame including the trough can be suppressed. Moreover, according to the above configuration, since it is unnecessary to increase the weight of the conveyor frame, the decrease in the degree of freedom in design and the increase in the manufacturing cost can be suppressed.

In the above belt conveyor, a plurality of air supply holes may be formed on the trough, and the air supply line may include a plurality of air supply headers configured to store the air once and supply the stored air through the corresponding air supply holes to between the conveyor belt and the trough. Moreover, the pressure variation suppressor may be provided at at least one of the plurality of air supply headers.

According to this configuration, since the pressure variation suppressor is attached to the air supply header located in the vicinity of the trough in the air supply line, the vibration of the trough that is a vibration source can be suppressed, and therefore, the effect of suppressing the vibration of the conveyor frame can be improved.

In the above belt conveyor, the pressure variation suppressor may be provided at a side portion of the at least one air supply header.

In many cases, other devices are provided under the air supply header. Therefore, if the pressure variation suppressor is provided under the air supply header, there is a possibility that the pressure variation suppressor interferes with such devices. On the other hand, other devices are hardly provided at a lateral side of the air supply header. Therefore, when the pressure variation suppressor is provided at the side portion of the air supply header as above, the pressure variation suppressor can be prevented from interfering with such devices.

In the above belt conveyor, a plurality of air supply holes may be formed on the trough. Moreover, the air supply line may include: a plurality of air supply headers configured to store the air once and supply the stored air through the corresponding air supply holes to between the conveyor belt and the trough; an air supply blower configured to pressurize the air and supply the air; and an air supply pipe through which the air supplied from the air supply blower is supplied to the plurality of air supply headers. Furthermore, the pressure variation suppressor may be provided at the air supply pipe.

The air supply pipe has a certain degree of length. Therefore, according to the above configuration, the degree of freedom in design regarding the installation position of the pressure variation suppressor can be improved.

In the above belt conveyor, the air supply pipe may include: a common portion connected to the air supply blower; and a plurality of branch portions branching from the common portion and extending toward the corresponding air supply headers. Moreover, the pressure variation suppressor may be provided at the common portion.

As above, when the pressure variation suppressor is provided at the common portion of the air supply pipe, the pressure variation of the air having the predetermined frequency can be suppressed entirely in the longitudinal direction of the trough, and the vibration of the conveyor frame can be suppressed entirely in the longitudinal direction of the trough, without providing the pressure variation suppressors such that the pressure variation suppressors correspond to all the air supply headers.

In the above belt conveyor, the pressure variation suppressor may be a Helmholtz resonator configured to resonate with the pressure variation having the predetermined frequency to generate the pressure variation that interferes with the pressure variation having the predetermined frequency.

The Helmholtz resonator does not require a power source, and the entire size thereof is relatively small. Therefore, according to the above configuration, the degree of freedom in design of the belt conveyor improves, and the increase in size of the entire belt conveyor can be suppressed.

In the above belt conveyor, the pressure variation suppressor may include: a main body portion having a predetermined volume; and a tubular neck portion extending from the main body portion to the air supply line. The neck portion may be configured to be able to adjust a resonance frequency of the pressure variation suppressor by changing a length thereof by expansion or contraction.

According to this configuration, the resonance frequency of the pressure variation suppressor can be adjusted. Therefore, for example, even when the vibration frequency at which the trough vibrates changes, the frequency of the pressure variation generated from the pressure variation suppressor can be made to coincide with the vibration frequency.

## Advantageous Effects of Invention

According to the above configuration, the air floating belt conveyor capable of operating stably by suppressing the vibration of the conveyor frame while suppressing the decrease in the degree of freedom in design and the increase in the manufacturing cost can be provided.

## Brief Description of Drawings

FIG. 1 is a schematic diagram of a belt conveyor according to Embodiment 1.
FIG. 2 is a sectional view showing a conveyor belt of FIG. 1 and its vicinity.
FIG. 3 is a sectional view showing the conveyor belt of the belt conveyor according to Embodiment 2 and its vicinity.

## Description of Embodiments

### Embodiment 1

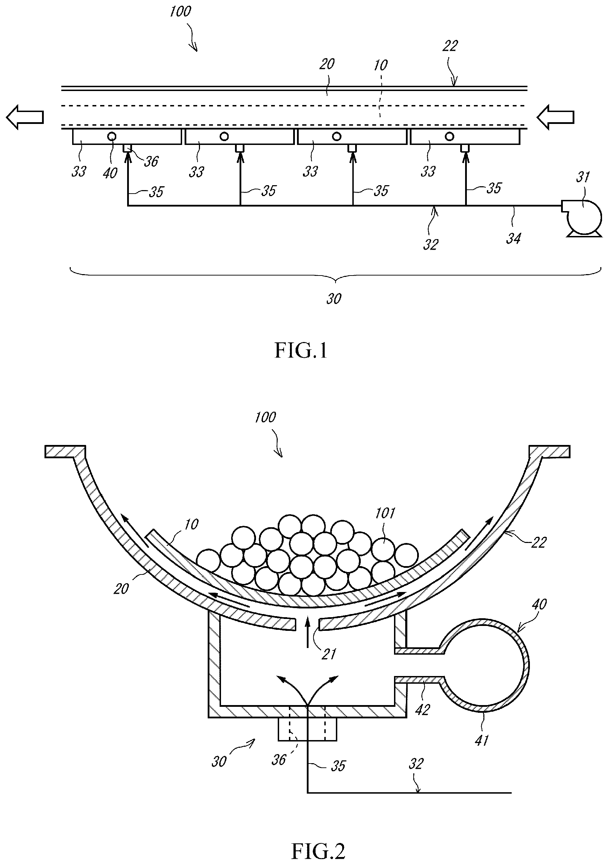

First, a belt conveyor 100 according to Embodiment 1 will be described. FIG. 1 is a schematic diagram of the belt conveyor 100 according to Embodiment 1. FIG. 2 is a sectional view showing a conveyor belt 10 of FIG. 1 and its vicinity.

As shown in FIG. 1, the belt conveyor 100 according to the present embodiment is a so-called air floating belt conveyor and includes the conveyor belt 10, a trough 20, an air supply line 30, and pressure variation suppressors 40. Hereinafter, these components will be described in order.

The conveyor belt 10 conveys conveyed objects 101, such as bulk materials. The conveyor belt 10 is formed to have an endless shape. The conveyor belt 10 is wound around a drive pulley and a driven pulley (both not shown) and is driven to rotate. It should be noted that FIG. 1 shows only an outward route side (carrier side) of the conveyor belt 10. The conveyor belt 10 has flexibility and has a shape corresponding to the shape of the below-described trough 20. In the present embodiment, as shown in FIG. 2, the conveyor belt 10 has a shape that is convex downward in a sectional view. The conveyed objects 101 are loaded on an upper surface of the conveyor belt 10.

The trough 20 supports the conveyor belt 10 through air. The trough 20 has a shape that is convex downward in a sectional view. Air supply holes 21 are formed on a bottom portion of the trough 20 so as to be lined up in a longitudinal direction at regular intervals. As shown by arrows in FIG. 2, when the air is supplied from the air supply line 30 (air supply headers 33) through the air supply holes 21, the supplied air flows between the trough 20 and the conveyor belt 10 and further flows outward in a width direction of the conveyor belt 10.

As above, the conveyor belt 10 and the trough 20 do not contact each other during operation but are connected to each other through the air that is an elastic body. The conveyor belt 10 and the trough 20 vibrate due to various conditions, and the vibration of the conveyor belt 10 and the vibration of the trough 20 influence each other through the air. Especially when the amount of conveyed objects 101 conveyed (the amount of conveyed objects 101 loaded) is a predetermined amount, an entire conveyor frame 22 including the trough 20 vibrates largely.

The air supply line 30 is a line through which the air is supplied to between the conveyor belt 10 and the trough 20. The air supply line 30 includes an air supply blower 31, an air supply pipe 32, and a plurality of air supply headers 33 which are arranged in this order from an upstream side.

The air supply blower 31 is a device configured to pressurize the air and supply the air. The air supply line 30 of the present embodiment includes one air supply blower 31 but may include a plurality of air supply blowers 31. For example, one air supply line 30 may be provided at each of the outward route side and a return route side (return side), or a plurality of air supply lines 30 may be provided at each of the outward route side and the return route side.

The air supply pipe 32 is a pipe through which the air supplied from the air supply blower 31 is supplied to the air supply headers 33. The air supply pipe 32 includes a common portion 34 and a plurality of branch portions 35. The common portion 34 is connected to the air supply blower 31. The branch portions 35 branch from the common portion 34 and extend toward the corresponding air supply headers 33.

The air supply headers 33 once store the air supplied from the air supply pipe 32 and then supply the air to between the conveyor belt 10 and the trough 20. As shown in FIG. 1, the air supply headers 33 are arranged on a lower surface of the trough 20 so as to be lined up in the longitudinal direction of the trough 20. As shown in FIG. 2, an air supply port 36 is formed at a lower portion of each air supply header 33, and the air is supplied from the air supply pipe 32 through the air supply port 36. Each air supply header 33 is provided so as to correspond to the plurality of air supply holes 21 and supplies the air through the plurality of air supply holes 21 to between the conveyor belt 10 and the trough 20. Since the air supply headers 33 once store the air, differences among the pressures of the air supplied to the air supply holes 21 can be suppressed.

The pressure variation controllers 40 are provided at the air supply line 30 and suppress a pressure variation having a predetermined frequency generated in the air in the air supply line 30. The pressure variation suppressors 40 of the present embodiment are so-called Helmholtz resonators. The Helmholtz resonator resonates with the pressure variation having the predetermined frequency generated in the air in the air supply line 30 to generate a pressure variation which interferes with the pressure variation having the predetermined frequency. With this, the pressure variation having the predetermined frequency generated in the air in the air supply line 30 can be suppressed.

The pressure variation suppressor 40 of the present embodiment is set such that a resonance frequency thereof coincides with a predetermined vibration frequency. Therefore, when the trough 20 vibrates at the predetermined vibration frequency, a pressure variation having a frequency corresponding to the predetermined vibration frequency among the pressure variations of the air between the conveyor belt 10 and the trough 20 is suppressed. As a result, the vibration of the trough 20 can be suppressed.

The pressure variation suppressor 40 of the present embodiment includes a main body portion 41 and a tubular neck portion 42. The main body portion 41 has a predetermined volume, and the neck portion 42 extends from the main body portion 41 to the air supply line 30. A resonance frequency f of the pressure variation suppressor 40 can be calculated by Formula 1 below where V denotes the volume of the main body portion 41, S denotes a sectional area of the neck portion 42, 1 denotes a length of the neck portion 42, and c denotes the speed of sound.

**Formula 1**

$$f = \frac{c}{2\pi} \sqrt{\frac{S}{Vl}} \qquad \cdots (1)$$

The pressure variation suppressors 40 may be provided at any portion of the air supply line 30. In the present embodiment, the pressure variation suppressors 40 are provided at side portions of the air supply headers 33. To be specific, in the present embodiment, the pressure variation suppressors 40 are attached to the air supply headers 33 located close to the trough 20 which is a vibration source in the air supply line 30. Therefore, the vibration of the trough 20 is suppressed, and as a result, the effect of suppressing the vibration of the conveyor frame 22 can be improved. Moreover, in many cases, other devices are provided under the air supply headers 33. Therefore, if the pressure variation suppressors 40 are provided under the air supply headers 33, there is a high possibility that the pressure variation suppressors 40 interfere with such devices. On the other hand, other devices are hardly provided at lateral sides of the air supply headers 33. Therefore, when the pressure variation suppressors 40 are provided at the side portions of the air supply headers 33 as in the present embodiment, the pressure variation suppressors 40 can be prevented from interfering with such devices. It should be noted that the pressure variation suppressors 40 may be provided under the air supply headers 33 depending on the positions of other devices or may be provided at other places of the air supply headers 33.

The pressure variation suppressors 40 may be provided at the air supply pipe 32 instead of the air supply headers 33. The air supply pipe 32 has a certain degree of length. Therefore, according to the above configuration, the degree of freedom in design regarding the installation positions of the pressure variation suppressors 40 can be improved.

Moreover, the pressure variation suppressor 40 may be provided at the common portion 34 of the air supply pipe 32. When the pressure variation suppressor 40 is provided at the common portion 34 of the air supply pipe 32, the pressure variation of the air having the predetermined frequency can be suppressed entirely in the longitudinal direction of the trough 20, and the vibration of the conveyor frame 22 can be suppressed entirely in the longitudinal direction of the trough 20, without providing the pressure variation suppressors 40 such that the pressure variation suppressors 40 correspond to all the air supply headers 33.

The shape of the pressure variation suppressor 40 of the present embodiment is constant. However, the shape of the pressure variation suppressor 40 may be changeable. For example, the neck portion 42 of the pressure variation suppressor 40 may be formed in a bellows shape and therefore be changeable in length. In this case, as shown by Formula 1 above, the resonance frequency of the pressure variation suppressor 40 can be adjusted by changing the length 1 of the neck portion 42. According to this configuration, even if the predetermined vibration frequency at which the trough 20 vibrates changes due to some conditions, the frequency of the pressure variation generated from the pressure variation suppressor 40 can be made to coincide with the predetermined vibration frequency. It should be noted that: the vibration frequency at which the trough 20 largely vibrates may be measured in advance, and the frequency of the pressure variation generated from the pressure variation suppressor 40 may be made to coincide with the measured vibration frequency (predetermined vibration frequency); or the vibration frequency when the trough 20 starts vibrating during the operation of the belt conveyor 100 may be measured, and the frequency of the pressure variation generated from the pressure variation suppressor 40 may be made to coincide with the measured vibration frequency (predetermined vibration frequency).

### Embodiment 2

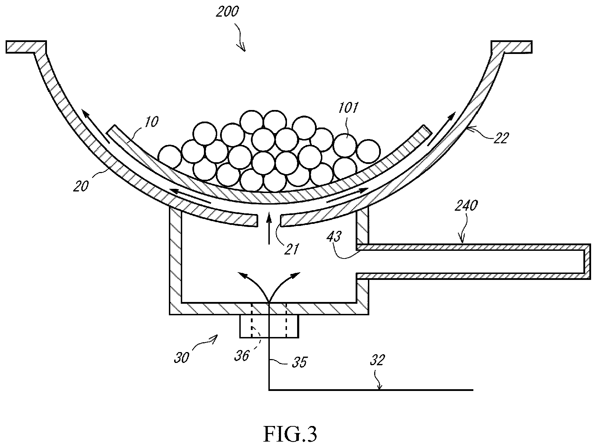

Next, a belt conveyor 200 according to Embodiment 2 will be described. FIG. 3 is a sectional view showing the conveyor belt 10 of the belt conveyor 200 according to Embodiment 2 and its vicinity and corresponds to FIG. 2 of Embodiment 1. The belt conveyor 200 according to the present embodiment is different in configuration from Embodiment 1 in that a pressure variation suppressor 240 is a so-called side branch. Except for this, the belt conveyor 200 according to the present embodiment is the same in configuration as the belt conveyor 100 according to Embodiment 1.

The pressure variation suppressor 240 of the present embodiment has such a cylindrical shape that: an end portion thereof located close to the air supply line 30 is open; and an opposite end portion thereof is closed. When the pressure variation having a frequency corresponding to the predetermined vibration frequency at which the trough 20 vibrates is transmitted to an inside of the pressure variation suppressor 240 through an opening portion 43 of the pressure variation suppressor 240, the pressure variation goes and returns in the inside of the pressure variation suppressor 240 and then comes out from the opening portion 43 so as to be delayed by 1/2 cycle. As a result, the pressure variation of the air having a frequency corresponding to the above-described predetermined vibration frequency interferes with the pressure variation coming out from the pressure variation suppressor 240 to be suppressed. Therefore, in the belt conveyor 200 according to the present embodiment, as with Embodiment 1, the vibration of the trough 20 can be suppressed, and therefore, the vibration of the conveyor frame 22 can be suppressed.

### Reference Signs List

| | |
|---|---|
| 10 | conveyor belt |
| 20 | trough |
| 21 | air supply hole |
| 30 | air supply line |
| 31 | air supply blower |
| 32 | air supply pipe |
| 33 | air supply header |
| 34 | common portion |
| 35 | branch portion |
| 40, 240 | pressure variation suppressor |
| 41 | main body portion |
| 42 | neck portion |
| 100, 200 | belt conveyor |
| 101 | conveyed object |

### Claims

1. A belt conveyor (100, 200) comprising:

   a conveyor belt (10) configured to convey a conveyed object (101);
   a trough (20) supporting the conveyor belt through air;
   an air supply line (30) through which the air is supplied to between the conveyor belt and the trough; and
   a pressure variation suppressor (40, 240) provided at the air supply line **characterised in that** the pressure variation suppressor is configured to suppress a pressure variation having a predetermined frequency in the air supply line by generating a pressure variation that interferes with the pressure variation having the predetermined frequency.

2. The belt conveyor according to claim 1, wherein:

a plurality of air supply holes (21) are formed on the trough;
the air supply line includes a plurality of air supply headers (33) configured to store the air once and supply the stored air through the corresponding air supply holes to between the conveyor belt and the trough; and
the pressure variation suppressor is provided at at least one of the plurality of air supply headers.

3. The belt conveyor according to claim 2, wherein the pressure variation suppressor is provided at a side portion of the at least one air supply header.

4. The belt conveyor according to claim 1, wherein:

a plurality of air supply holes (21) are formed on the trough;
the air supply line includes

a plurality of air supply headers (33) configured to store the air once and supply the stored air through the corresponding air supply holes to between the conveyor belt and the trough,
an air supply blower (31) configured to pressurize the air and supply the air, and
an air supply pipe (32) through which the air supplied from the air supply blower is supplied to the plurality of air supply headers; and
the pressure variation suppressor is provided at the air supply pipe.

5. The belt conveyor according to claim 4, wherein:

the air supply pipe includes

a common portion (34) connected to the air supply blower and
a plurality of branch portions (35) branching from the common portion and extending toward the corresponding air supply headers; and

the pressure variation suppressor is provided at the common portion.

6. The belt conveyor according to any one of claims 1 to 5, wherein the pressure variation suppressor is a Helmholtz resonator configured to resonate with the pressure variation having the predetermined frequency to generate the pressure variation that interferes with the pressure variation having the predetermined frequency.

7. The belt conveyor according to claim 6, wherein:

the pressure variation suppressor includes

a main body portion (41) having a predetermined volume and
a tubular neck portion (42) extending from the main body portion to the air supply line; and

the neck portion is configured to be able to adjust a resonance frequency of the pressure variation suppressor by changing a length thereof by expansion or contraction.

**Patentansprüche**

1. Gurtförderband (100, 200), umfassend:

ein Förderband (10), das konfiguriert ist, ein transportiertes Objekt (101) zu transportieren;
eine Mulde (20), die das Förderband anhand von Luft trägt;
eine Luftzufuhrleitung (30), durch welche die Luft zwischen das Förderband und die Mulde zugeführt wird; und
einen Druckschwankungsentstörer (40, 240), der an der Luftzufuhrleitung bereitgestellt ist, **dadurch gekennzeichnet, dass** der Druckschwankungsentstörer konfiguriert ist, eine Druckschwankung mit einer vorbestimmten Frequenz in der Luftzufuhrleitung durch Generieren einer Druckschwankung, welche die Druckschwankung mit der vorbestimmten Frequenz beeinträchtigt, zu entstören.

2. Gurtförderband nach Anspruch 1, wobei:

eine Vielzahl von Luftzufuhrlöchern (21) an der Mulde gebildet ist;
die Luftzufuhrleitung eine Vielzahl von Luftzufuhr-Kopfteilen (33) konfiguriert ist, die Luft einmal zu speichern und die gespeicherte Luft durch die entsprechenden Luftzufuhrlöcher zwischen das Förderband und die Mulde zuzuführen; und
der Druckschwankungsentstörer an mindestens einem von der Vielzahl von Luftzufuhr-Kopfteilen bereitgestellt ist.

3. Gurtförderband nach Anspruch 2, wobei der Druckschwankungsentstörer an einem Seitenteil von dem mindestens einen Luftzufuhr-Kopfteil bereitgestellt ist.

4. Gurtförderband nach Anspruch 1, wobei:

    eine Vielzahl von Luftzufuhrlöchern (21) an der Mulde gebildet ist;
    die Luftzufuhrleitung Folgendes beinhaltet

        eine Vielzahl von Luftzufuhr-Kopfteilen (33), die konfiguriert ist, die Luft einmal zu speichern und die gespeicherte Luft durch die entsprechenden Luftzufuhrlöcher zwischen das Förderband und die Mulde zuzuführen,
        einen Luftzufuhrbläser (31), der konfiguriert ist, die Luft mit Druck zu beaufschlagen und die Luft zuzuführen, und
        ein Luftzufuhrrohr (32), durch welches die von dem Luftzufuhrbläser zugeführte Luft an die Vielzahl von Luftzufuhr-Kopfteilen zugeführt wird; und

    der Druckschwankungsentstörer an dem Luftzufuhrrohr bereitgestellt ist.

5. Gurtförderband nach Anspruch 4, wobei:

    das Luftzufuhrrohr Folgendes beinhaltet

        eine gemeinsame Leitung (34), die mit dem Luftzufuhrbläser verbunden ist und
        eine Vielzahl von Abzweigungsleitungen (35), die von der gemeinsamen Leitung abzweigen und sich in Richtung der entsprechenden Luftzufuhr-Kopfteile erstrecken; und

    der Druckschwankungsentstörer an der gemeinsamen Leitung bereitgestellt ist.

6. Gurtförderband nach einem der Ansprüche 1 bis 5, wobei der Druckschwankungsentstörer ein Helmholtz-Resonator ist, der konfiguriert ist, mit der Druckschwankung, welche die vorbestimmte Frequenz aufweist, mitzuschwingen, um die Druckschwankung, welche die Druckschwankung mit der vorbestimmten Frequenz beeinträchtigt, zu generieren.

7. Gurtförderband nach Anspruch 6, wobei:

    der Druckschwankungsentstörer Folgendes beinhaltet

        einen Hauptkörperteil (41), der ein vorbestimmtes Volumen aufweist und
einen rohrförmigen Ansatzteil (42), der sich von dem Hauptkörperteil bis zur Luftzufuhrleitung erstreckt; und

wobei der Ansatzteil konfiguriert ist, in der Lage zu sein, eine Resonanzfrequenz des Druckschwankungsentstörers durch Verändern einer Länge desselben durch Expansion oder Kontraktion einzustellen.

**Revendications**

1. Transporteur à courroie (100,200) comprenant :

    une courroie transporteuse (10) configurée pour transporter un objet à transporter (101) ;
    une auge (20) supportant la courroie transporteuse avec de l'air ;
    une conduite d'alimentation en air (30) à travers laquelle l'air est fourni entre la courroie transporteuse et l'auge ; et
    un dispositif de suppression de variation de pression (40, 240) prévu au niveau de la conduite d'alimentation en air **caractérisé en ce que** le dispositif de suppression de variation de pression est configuré pour supprimer une variation de pression présentant une fréquence prédéterminée dans la conduite d'alimentation en air en générant une variation de pression qui interfère avec la variation de pression présentant la fréquence prédéterminée.

2. Transporteur à courroie selon la revendication 1, dans lequel :

    une pluralité de trous d'alimentation en air (21) sont formés sur l'auge ;
    la conduite d'alimentation en air inclut une pluralité de collecteurs d'alimentation en air (33) configurés pour stocker l'air une fois et fournir l'air stocké à travers les trous d'alimentation en air correspondants entre la courroie transporteuse et l'auge ; et
    le dispositif de suppression de variation de pression est prévu au niveau d'au moins l'un de la pluralité de collecteurs d'alimentation en air.

3. Transporteur à courroie selon la revendication 2, dans lequel le dispositif de suppression de variation de pression est prévu au niveau d'une partie latérale du au moins un collecteur d'alimentation en air.

4. Transporteur à courroie selon la revendication 1, dans lequel :

    une pluralité de trous d'alimentation en air (21) sont formés sur l'auge ;
la conduite d'alimentation en air inclut

une pluralité de collecteurs d'alimentation en air (33) configurés pour stocker l'air une fois et fournir l'air stocké à travers les trous d'alimentation en air correspondants entre la courroie transporteuse et l'auge,
une soufflante d'alimentation en air (31) configurée pour mettre sous pression l'air et fournir l'air, et
un tuyau d'alimentation en air (32) à travers lequel l'air fourni à partir de la soufflante d'alimentation en air est fourni à la pluralité de collecteurs d'alimentation en air ; et

le dispositif de suppression de variation de pression est prévu au niveau du tuyau d'alimentation en air.

5. Transporteur à courroie selon la revendication 4, dans lequel :

le tuyau d'alimentation en air inclut

une partie commune (34) connectée à la soufflante d'alimentation en air et
une pluralité de parties ramifiées (35) se ramifiant à partir de la partie commune et s'étendant vers les collecteurs d'alimentation en air correspondants ; et

le dispositif de suppression de variation de pression est prévu au niveau de la partie commune.

6. Transporteur à courroie selon l'une quelconque des revendications 1 à 5, dans lequel le dispositif de suppression de variation de pression est un résonateur de Helmholtz configuré pour résonner avec la variation de pression présentant la fréquence prédéterminée pour générer la variation de pression qui interfère avec la variation de pression présentant la fréquence prédéterminée.

7. Transporteur à courroie selon la revendication 6, dans lequel :

le dispositif de suppression de variation de pression inclut

une partie corps principal (41) présentant un volume prédéterminé et
une partie col tubulaire (42) s'étendant de la partie corps principal à la conduite d'alimentation en air ; et

la partie col est configurée pour être apte à ajuster une fréquence de résonance du dispositif de suppression de variation de pression en changeant une longueur de celui-ci par dilatation ou contraction.

FIG.1

FIG.2

FIG.3

## REFERENCES CITED IN THE DESCRIPTION

**Patent documents cited in the description**

- JP 2012136347 A

- JP 2002068441 A